# EUROPÄISCHE PATENTANMELDUNG

(11) **EP 2 824 796 A1**
(43) Veröffentlichungstag der Anmeldung: **14.01.2015**
(21) Anmeldenummer: 14175930.8
(22) Anmeldetag: 07.07.2014
(51) Int. Cl.: H02J 7/34, G06Q 50/06

(54) **Mobile Netzanschlusseinrichtung zum Anschluss einer Energieerzeugungsanlage an einem Stromversorgungsnetz**

(30) Priorität: 12.07.2013 DE 102013011625
(71) Anmelder: RWE Deutschland AG, 45128 Essen (DE)
(72) Erfinder: Jaschke, Mario, 59759 Arnsberg (DE); Küchler, Ulrich, 47918 Tönisvorst (DE); Müller, Jens-Christoph, 44369 Dortmund (DE)
(74) Vertreter: Kierdorf Ritschel

(57) **Zusammenfassung**

Die vorliegende Erfindung offenbart eine mobile Netzanschlusseinrichtung (10) zum Anschluss einer Energieerzeugungsanlage an einem Stromversorgungsnetz, wobei die mobile Netzanschlusseinrichtung (10) einen transportablen Container (10), ein im Container (10) angeordnetes Abgabefeld (21) zum Anschluss der Netzanschlussrichtung (1) an die Energieerzeugungsanlage und ein im Container (10) angeordnetes Einspeisefeld (22) zum zumindest mittelbaren Anschluss der Netzanschlusseinrichtung (1) an das Stromversorgungsnetz umfasst.

## Beschreibung

Energieerzeugungsanlagen zur Gewinnung von erneuerbarer Energie sind beispielsweise als Solarkraftwerke oder Windkraftanlagen ausgebildet. Bei Windkraftanlagen wird ein Teil der Energie des Windes mit Hilfe von Rotorblättern entnommen. Die Rotorblätter, die drehfest mit einer drehbar gelagerten Narbe verbunden sind, werden in Drehung versetzt. Ein mit der Narbe zumindest mittelbar verbundener Generator wandelt die Bewegungsenergie der Rotoren und der Narbe in elektrische Energie um.

Windkraftanlagen werden gemäß dem Stand der Technik über stationäre und in der Nachbarschaft der Windkraftanlage errichtete Netzanschlusseinrichtungen an ein Stromversorgungsnetz angeschlossen. Dazu wird in der Nachbarschaft des Turmfußes der Windkraftanlage ein stationäres Gebäude errichtet, in dem zumindest ein Abgangsfeld und ein Einspeisefeld angeordnet sind. Sowohl das Abgangsfeld als auch das Einspeisefeld werden mit Schaltanlagen realisiert, in denen beispielsweise Vakuumschalter zum trennbaren Verbinden mit einer Sammelschiene angeordnet sind. Bei dem Abgangsfeld kann somit der Generator mittels eines Vakuumschalters mit der Sammelschiene trennbar elektrisch verbunden werden, und bei dem Einspeisefeld kann die Sammelschiene beispielsweise mit einem Transformator zum Transformieren der von dem Generator / den Generatoren gelieferten Spannung auf eine gewünschte Transportspannung trennbar elektrisch verbunden werden. Die Transportspannung liegt üblicherweise in der Mittelspannungsebene zwischen 1 kV bis 52kV, so dass die von dem Generator / den Generatoren gelieferte Spannung auf die in dem Mittelspannungsnetz verwendete Netznennspannung transformiert wird. Die Netzanschlusseinrichtung bindet die Energieerzeugungsanlagen an das Mittel- oder Hochspannungsnetz an.

Der Aufbau vor Ort, die Einrichtung solcher Netzanschlusseinrichtungen und deren Inbetriebnahme ist zeitaufwendig und kostenintensiv. Dazu muss das Gebäude errichtet werden und nach Fertigstellung des Gebäudes muss die Primärtechnik in Form der Schaltanlagen und die Sekundärtechnik in Form einer Eigenbedarfsversorgung, Steuerungseinrichtung für die Energieerzeugungsanlage, Stromanschluss des Gebäudes an ein Stromnetz, usw. in dem Gebäude installiert werden. Ferner ist es unter Umständen auch noch notwendig, eine Versorgungsleitung für die Sekundärtechnik zum Gebäude hin zu verlegen.

Im Falle eines Defekts muss dieser zuerst identifiziert werden, dass defekte Gerät muss ausgebaut und durch ein funktionstüchtiges Gerät ausgetauscht werden. Dies führt dazu, dass über einen langen Zeitraum keine Energie von der Energieerzeugungsanlage in das Stromnetz eingespeist werden kann.

Die der vorliegenden Erfindung zugrunde liegende Aufgabe ist es, eine verbesserte Anschlusseinrichtung bereitzustellen, die die oben beschriebenen Nachteile nicht aufweist.

Diese Aufgabe wird erfindungsgemäß durch eine mobile Netzanschlusseinrichtung zum Anschluss einer Energieerzeugungsanlage an einem Stromversorgungsnetz mit den in Anspruch 1 angegebenen Merkmale gelöst. Vorteilhafte Ausgestaltungen sind in den Unteransprüchen angegeben.

Der Erfindung liegt weiterhin die Aufgabe zugrunde, ein Verfahren bereitzustellen, das die zuvor beschriebenen Nachteile vermeidet.

Diese Aufgabe wird erfindungsgemäß durch ein Verfahren zum Anschließen einer Energieerzeugungsanlage an einem Stromversorgungsnetz mit den in Anspruch 15 angegebenen Merkmale gelöst.

Im genaueren wird die der vorliegenden Erfindung zugrundeliegende Aufgabe durch eine mobile Netzanschlusseinrichtung zum Anschluss einer Energieerzeugungsanlage an einem Stromversorgungsnetz gelöst, die einen transportablen Container, ein im Container angeordnetes Abgabefeld zum Anschluss der Netzanschlusseinrichtung an die Energieerzeugungsanlage und ein im Container angeordnetes Einspeisefeld zum zumindest mittelbaren Anschluss der Netzanschlusseinrichtung an das Stromversorgungsnetz umfasst. Die erfindungsgemäße mobile Netzanschlusseinrichtung bietet den Vorteil, dass diese nicht vor Ort, d.h. in der Nähe der Energieerzeugungsanlage zusammengebaut werden muss, sondern beispielsweise in einem Werk zusammengebaut und vormoniert werden kann. Entsprechend kann im Werk die Verkabelung der Primärtechnik und der Sekundärtechnik durchgeführt werden, so dass die Verkabelung an die Energieerzeugungsanlage innerhalb einer kurzen Montagezeit durchgeführt werden kann. Folglich kann die erfindungsgemäße mobile Netzanschlusseinrichtung im Werk einer Vorinbetriebnahme unterzogen werden, da die Funktionen der Netzanschlusseinrichtung alle bereits in dieser integriert sind, da die gesamte Primärtechnik als auch die gesamte Sekundärtechnik in dem mobilen Container integriert sind. Folglich kann eine Energieerzeugungsanlage binnen kurzer Zeit an einem Stromversorgungsnetz angeschlossen werden. Dies bietet auch die Möglichkeit, im Falle eines Defekts einer Übergabestation diese durch die erfindungsgemäße mobile Netzanschlusseinrichtung auszuwechseln, so das der Zeitraum, in dem die von der Energieerzeugungsanlage erzeugte Energie nicht in das Stromnetz eingespeist werden kann, auf ein Minimum reduziert wird.

Vorzugsweise umfasst die Netzanschlusseinrichtung ferner eine im Container angeordnete Steuerungseinrichtung zum Steuern der Energieerzeugungsanlage.

Dadurch wird die Inbetriebnahmezeit der Energieerzeugungsanlage nochmals verkürzt.

Vorteilhafterweise ist die Netzanschlusseinrichtung so ausgebildet, dass angeschlossene Energieerzeugungsanlagen automatisch erkannt werden, so dass nach Anschluss der Energieerzeugungsanlage an der Netzanschlusseinrichtung nach dem "plug and play"-Prinzip ein Betrieb der Energieerzeugungsanlage und ein Einspeisen von Energie in das Stromversorgungsnetz durchführbar ist.

Durch eine entsprechend ausgebildete Netzanschlusseinrichtung wird die Inbetriebnahmezeit der Energieversorgungsanlage nochmals verkürzt, da lediglich nur noch eine elektrische Verbindung zwischen der Netzanschlusseinrichtung und der Energieerzeugungsanlage und dem Stromversorgungsnetz durchgeführt werden muss, da die Netzanschlusseinrichtung bereits im Vorfeld so eingerichtet sein kann, dass diese vor Ort im Bereich der Energieerzeugungsanlage nicht mehr eingestellt werden muss.

Vorzugsweise umfasst die Netzanschlusseinrichtung zumindest ein zweites Abgabefeld, das im Container angeordnet ist.

Dadurch ist es möglich, dass die Netzanschlusseinrichtung nicht lediglich nur für eine Energieerzeugungsanlage, sondern alternativ auch für zwei Energieversorgungsanlagen verwendet werden kann. Bei den Energieerzeugungsanlagen kann es sich beispielsweise um Windkraftanlagen handeln. Weiterhin kann das zweite Abgabefeld aber auch für den Eigenbedarf der Netzanschlusseinrichtung verwendet werden, so dass von der Energieerzeugungsanlage gewonnene Energie zur Energieversorgung der Netzanschlusseinrichtung verwendet wird.

Natürlich ist es auch möglich, dass die Netzanschlusseinrichtung mehr als zwei Abgabefelder umfasst. Dadurch ist es möglich, dass mittels der Netzanschlusseinrichtung eine der Anzahl der Abgabefelder entsprechende Anzahl von Energieerzeugungsanlagen an dem Stromversorgungsnetz angeschlossen werden können.

Vorzugsweise ist die Netzanschlusseinrichtung derart ausgebildet, dass zur Energieversorgung der Steuerungseinrichtung diese zumindest mittelbar mit dem zweiten Abgabefeld elektrisch verbunden ist.

Das zweite Abgabefeld kann als sogenanntes Eigenbedarfsabgabefeld vorgesehen sein, über welches die Steuerungseinrichtung mit Strom versorgt werden kann.

Dadurch ist es möglich, dass die Steuerungseinrichtung nicht über einen externen Stromanschluss mit Energie versorgt werden muss, sondern dass die Steuerungseinrichtung mit der von der Energieerzeugungsanlage erzeugten Energie mit Strom versorgt wird.

Natürlich ist es auch möglich, dass weitere Sekundärtechnik, beispielsweise in Form eines Gleichrichters, einer Batterie, einer Zähleinrichtung usw. mit dem zweiten Abgabefeld elektrisch verbunden ist, so dass die Energieerzeugungsanlage dazu genutzt werden kann, diese Sekundärtechnik mit elektrischer Energie zu versorgen. Weiterhin wird Energie beispielsweise von einer Batterie gespeichert werden, so dass zu Zeiten fehlender Energieerzeugung mittels der Energieerzeugungsanlage die Sekundärtechnik weiterhin mit Strom versorgt werden kann.

Die im Container angeordnete Batterie kann insbesondere als verschlossene Batterie ausgebildet sein, da diese kompakter verbaut werden kann als eine geschlossene Batterie, so dass der begrenzt zur Verfügung stehende Raum im Container effizient genutzt wird.

Vorzugsweise ist bei der Netzanschlusseinrichtung eine Seitenwand des Containers abnehmbar oder zumindest teilweise abnehmbar, so dass über eine entsprechend gebildete Öffnung in der Seitenwand Schaltanlagen in den Container einbringbar sind.

Da eine Eintrittsöffnung in die Netzanschlusseinrichtung in ihrer Größe üblicherweise begrenzt ist, ist es durch Bereitstellen einer abnehmbaren Seitenwand im Container möglich, relativ große Schaltanlagen in den Container einzubringen.

Vorzugsweise ist in einem Boden des Containers eine Öffnung zum Durchführen von Kabeln vorgesehen. Dadurch ist es möglich, stromführende Kabel über den Boden des Containers an die Außenseite der Netzanschlusseinrichtung zu führen. Die Seitenwand ist vorzugsweise so ausgeführt, dass sie bei angeschlossenen Schaltanlagen weiterhin abnehmbar ist und Wartungsarbeiten an den Schaltanlagen durchgeführt werden können.

Vorzugsweise wird die Netzanschlusseinrichtung bzw. der Container der Netzanschlusseinrichtung auf ein Streifenfundament aufgesetzt. Alternativ kann die Netzanschlusseinrichtung auch auf einem Auflagecontainer aufgesetzt werden, der unterhalb des Containers der Anschlusseinrichtung angeordnet ist. Dadurch kann die Höhe des Containers der Anschlusseinrichtung reduziert werden. Dies erleichtert den Transport der erfindungsgemäßen Netzanschlusseinrichtung beispielsweise mittels eines Lastkraftwagens oder auf einem Güterwaggon eines Zuges. Durch Bereitstellen eines Auflagecontainers ist es auch nicht notwendig, ein Streifenfundament zum Befestigen der Netzanschlusseinrichtung mit dem Untergrund vorzusehen.

Die der Erfindung zugrundeliegende Aufgabe wird weiterhin durch ein Verfahren zum Anschließen einer Energieerzeugungsanlage an einem Stromversorgungsnetz gelöst, wobei das Verfahren folgende Verfahrensschritte umfasst:
- Bereitstellen einer mobilen Netzanschlusseinrichtung oder eines mobilen Netzanschlusssystems im Bereich der Energieerzeugungsanlage;
- Anschließen der Energieerzeugungsanlage an das Abgabefeld der Netzanschlusseinrichtung;
- Anschließen des Einspeisefeldes an das Stromversorgungsnetz; und
- Inbetriebnehmen der Energieerzeugungsanlage.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Querschnittsdarstellung einer erfindungsgemäßen mobilen Netzanschlusseinrichtung; und
- Figur 2:: eine schematische Querschnittsdarstellung einer weiteren Ausführungsform der mobilen Netzanschlusseinrichtung.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

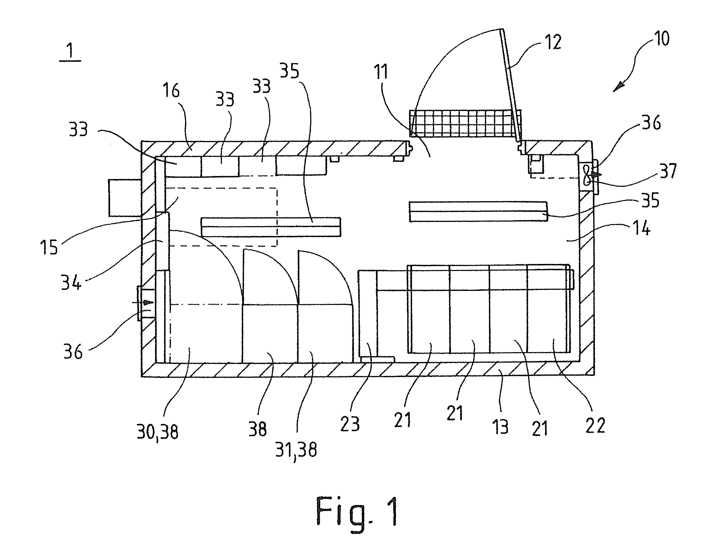

Figur 1 zeigt eine schematische Querschnittsdarstellung einer erfindungsgemäßen mobilen Netzanschlusseinrichtung 1 in Form einer Übergabestation 1. Die Übergabestation 1 umfasst einen Container 10, dessen Innenraum durch vier Seitenwände 13, einen Boden 14 und einem nicht dargestellten Dach beschränkt ist. Der Innenraum des Containers 10 ist über einen Eingang 11, der mittels einer Tür 12 verschließbar ist, betretbar.

Im Innenraum des Containers 10, der als ein transportabler Container 10 ausgebildet ist, sind ein Einspeisefeld 22 und drei Abgangsfelder 21 angeordnet. Sowohl das Einspeisefeld 22 als auch die Abgangsfelder 21 sind durch Schaltanlagen realisiert, in denen Schalter, vorzugsweise Vakuumschalter ein Verbinden und ein Trennen von elektrischen Einrichtungen mit einer Sammelschiene bewirken können.

Mittels des Einspeisefelds 22 ist die Übergabestation 10 dem Stromversorgungsnetz elektrisch anschließbar. Mittels den zwei in Figur 1 mittig dargestellten Abgabefeldern 21 ist die Übergabestation 10 mit zwei Energieerzeugungsanlagen elektrisch verbindbar. Über die Abgangsfelder 21 sind die jeweiligen Energieerzeugungsanlagen, die beispielsweise als Windkraftanlagen ausgebildet sein können, mit einer Sammelschiene verbindbar. Die von der bzw. von den Energieerzeugungsanlagen eingespeiste Energie wird über das Einspeisefeld 22 einem nicht dargestellten Transformator übermittelt. Unterhalb der Abgabefelder und des Einspeisefelds ist eine Kabelwanne 23 zum Aufnehmen von Elektrokabeln vorgesehen, die zu den Abgabefeldern 21 und zu dem Einspeisefeld und von diesen weg führen.

Das in Figur 1 links dargestellte Abgabefeld 21 ist ein sogenanntes Eigenbedarfsfeld, das beispielsweise mit einem Eigenbedarfs-Wandler elektrisch verbunden ist, und über das ein Gleichrichter und/oder eine Batterie und/oder im allgemeinen mit Sekundärtechnik mit elektrischer Energie versorgt wird, die beispielsweise mittels der Energieerzeugungsanlage selber gewonnen wird.

Die Übergabestation 10 umfasst ferner eine Steuerungseinrichtung 30, die in einem dafür vorgesehenen Sekundärtechnik-Schrank 38 innerhalb des Containers 10 angeordnet ist. Mittels der Steuerungseinrichtung 30 können die jeweiligen Abgangsfelder und Einspeisefelder der Übergabestation 10 gesteuert werden. Darüber hinaus kann optional mittels der Steuerungseinrichtung 30 auch die Energieerzeugungsanlage zumindest teilweise gesteuert werden.

Die mobile Netzanschlusseinrichtung 1 kann dabei so ausgebildet sein, dass angeschlossene Energieerzeugungsanlagen und/oder angeschlossene weitere Sekundärtechnik und Primärtechnik automatisch erkannt werden, so dass nach Anschluss der Energieerzeugungsanlage an der Netzanschlusseinrichtung 1 nach dem "plug and play"-Prinzip ein Betrieb der Energieerzeugungsanlage und ein Einspeisen von Energie in das Stromversorgungsnetz einfach durchführbar ist.

Aus Figur 1 ist ferner ersichtlich, dass in der Übergabestation 11 mehrere Zahleinrichtungen 33 angeordnet sind, mittels denen die von Energieerzeugungsanlagen erzeugte Energieproduktion bzw. -gewinnung ermittelt werden kann.

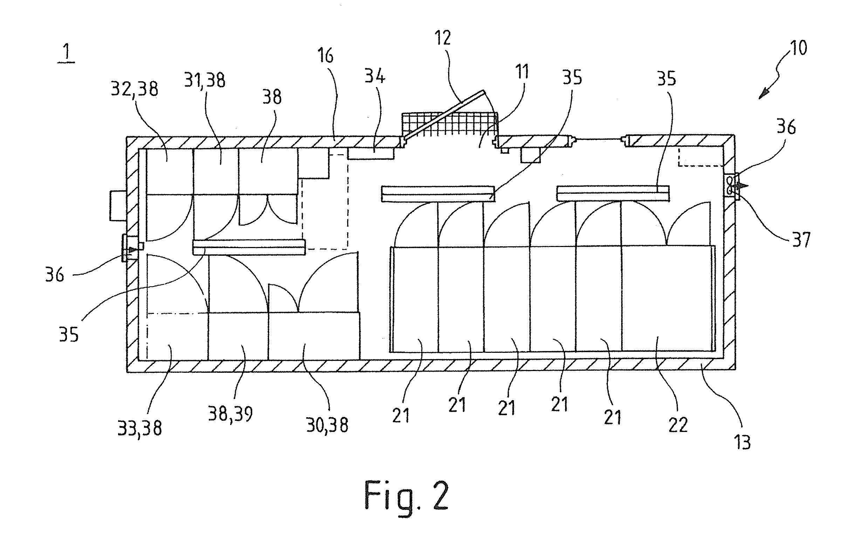

Ein Gleichrichter 31, der ebenfalls in einem Sekundärtechnik-Schrank 38 des Containers 10 angeordnet ist, kann beispielsweise mit dem Eigenbedarfsfeld 21 zumindest mittelbar verbunden sein. Der Gleichrichter 31 kann mit einer in Figur 1 nicht dargestellten Batterie, die jedoch in Figur 2 dargestellt ist, elektrisch gekoppelt sein und diese aufladen. Mittels der Batterie sind dann die unterschiedlichen Gerätschaften der Sekundärtechnik mit Energie versorgbar.

Ferner ist aus Figur 1 ersichtlich, dass im Innenraum des Containers 10 eine Heizeinrichtung 34 vorgesehen ist, mittels der die Temperatur innerhalb des Containers 10 im Bedarfsfall angehoben werden kann.

Ferner sind in Seitenwänden 13 des Containers 10 zwei diametral gegenüberstehend angeordnete Lüftungsöffnungen 36 vorgesehen, wobei in einer Lüftungsöffnung ein Ventilator 37 angeordnet ist. Über die Lüftungsöffnungen und den Ventilator 37 kann effektiv ein Luftaustausch in dem Container 10 erfolgen, so dass ein Wärmestau innerhalb des Containers 10 zuverlässig unterbunden werden kann.

Aus Figur 1 ist ferner ersichtlich, dass im Boden 14 des Containers 10 eine Bodenöffnung 15 vorgesehen ist. Über die Bodenöffnung 15, die beispielsweise mittels einer Luke verschließbar ist, ist ein Raum unterhalb des Containers 10 zugänglich. Beispielsweise kann eine Verkabelung der Abgabefelder 21 und des Einspeisefeldes 22 unterhalb des Containers verlaufen. Der Container 10 kann dann beispielsweise auf ein entsprechendes Streifenfundament aufgestellt werden oder kann alternativ und/oder zusätzlich auf einen nicht dargestellten Auflagecontainer aufgesetzt werden. Die elektrischen Leitungen unterhalb des Containers 10 können dann über die Bodenöffnung 15 im Boden 14 des Containers zugänglich sein. Obschon in Figur 1 nicht dargestellt, kann die den Abgabefeldern 21 und dem Einspeisefeld 22 benachbarte Seitenwand 13 des Containers 10 abnehmbar sein, so dass die Schaltanlagen über diese Öffnung in den Container einbringbar sind. Dies kann notwendig sein, wenn die Eingangsbreite des Eingangs 11 kleiner ist als die entsprechende Breitenausdehnung der Schaltanlagen, die die Abgabefelder und das Einspeisefeld 22 bilden. Insbesondere ist es dann vorteilhaft, die Verkabelung der Schaltanlagen unter dem Boden 14 des Containers 10 zu verlegen.

Figur 2 zeigt eine weitere Ausführungsform der erfindungsgemäßen mobilen Netzanschlusseinrichtung 1, die als Schaltcontainer 10 ausgebildet ist. Der Schaltcontainer 10 unterscheidet sich von der in Figur 1 dargestellten Übergabestation 1 dadurch, dass in dem Schaltcontainer 10 fünf Abgangsfelder realisiert sind und der Schaltcontainer 10 ferner eine Transformatorregelung 39 umfasst, die in einem Sekundärtechnik-Schrank 38 angeordnet ist. Der Sammelschienen-Strom des Schaltcontainers 10 beträgt bis zu 2.500 Ampere, wohingegen der Sammelschienen-Strom der Übergabestation 10, die in Figur 1 dargestellt ist, lediglich bis zu 630 Ampere beträgt. Die Spannungsebenen sowohl der Übergabestation 10 als auch des Schaltcontainers 10 betragen zwischen 1 KV und 52 KV, vorzugsweise 36 KV.

Die in Figur 1 dargestellte Übergabestation weist eine Länge von 4,885 m, eine Breite von 2,435 m und eine Höhe von 2,96 m auf. Der in Figur 2 dargestellte Schaltcontainer 10 weist eine Länge von 7,75 m oder 6,0 m, eine Breite von 3,0 m und ein Höhe von 3,3 m auf. Folglich sind sowohl die Übergabestation 10 als auch der Schaltcontainer 10 mittels beispielsweise eines Lastkraftwagens oder mittels eines Güterwaggons transportierbar.

Die vorliegende Erfindung offenbart eine mobile Netzanschlusseinrichtung 10, in der sämtliche Primärtechnik als auch Sekundärtechnik, die zum Betrieb einer Energieerzeugungsanlage notwendig sind, integriert sind, so dass im Vergleich zu aus dem Stand der Technik bekannten Übergabestationen die Zeit zur Inbetriebnahme einer Energieerzeugungsanlage erheblich verkürzt wird. Ferner kann im Fall eines Defekts einer Übergabestation 10 bzw. eines Schaltcontainer 10 einfach durch eine andere mobile Netzanschlusseinrichtung ausgetauscht werden.

### Bezugszeichenliste

- 1: Mobile Netzanschlusseinrichtung / Übergabestation / Schaltcontainer
- 10: Container
- 11: Eingang (des Containers)
- 12: Tür
- 13: Seitenwand (des Containers)
- 14: Boden (des Containers)
- 15: Bodenöffnung
- 16: Dämmung (des Containers)
- 21: Abgabefeld
- 22: Einspeisefeld
- 23: Kabelkanal
- 30: Steuerungseinrichtung
- 31: Gleichrichter
- 32: Batterie
- 33: Zähleinrichtung
- 34: Heizungseinrichtung
- 35: Beleuchtung
- 36: Lüftungsöffnung
- 37: Ventilator
- 38: Sekundärtechnik-Schrank
- 39: Transformatorregelung

## Patentansprüche

1. Mobile Netzanschlusseinrichtung (1) zum Anschluss einer Energieerzeugungsanlage an einem Stromversorgungsnetz, umfassend:
- einen transportablen Container (10);
- ein im Container (10) angeordnetes Abgabefeld (21) zum Anschluss der Netzanschlusseinrichtung (1) an die Energieerzeugungsanlage; und
- ein im Container (10) angeordnetes Einspeisefeld (22) zum zumindest mittelbaren Anschluss der Netzanschlusseinrichtung (1) an das Stromversorgungsnetz.

2. Mobile Netzanschlusseinrichtung (1) nach Anspruch 1, **dadurch gekennzeichnet, dass** die Netzanschlusseinrichtung (1) ferner eine im Container (10) angeordnete Steuerungseinrichtung (30) zum Steuern der Energieerzeugungsanlage umfasst.

3. Mobile Netzanschlusseinrichtung (1) nach einem der vorhergehenden Ansprüche, **dadurch gekennzeichnet, dass** die Netzanschlusseinrichtung (1) so ausgebildet ist, dass angeschlossene Energieerzeugungsanlagen automatisch erkannt werden, so dass nach Anschluss der Energieerzeugungsanlage an der Netzanschlusseinrichtung (1) nach dem "plug and play"-Prinzip ein Betrieb der Energieerzeugungsanlage und ein Einspeisen von Energie in das Stromversorgungsnetz durchführbar ist.

4. Mobile Netzanschlusseinrichtung (1) nach einem der vorhergehenden Ansprüche, **dadurch gekennzeichnet, dass** die Netzanschlusseinrichtung (1) zumindest ein zweites Abgabefeld (21) umfasst, das im Container (10) angeordnet ist.

5. Mobile Netzanschlusseinrichtung (1) nach Anspruch 4, wenn dieser von Anspruch 3 abhängig ist, **dadurch gekennzeichnet, dass** zur Energieversorgung der Steuerungseinrichtung (30) diese zumindest mittelbar mit dem zweiten Abgabefeld (21) elektrisch verbunden ist.

6. Mobile Netzanschlusseinrichtung (1) nach einem der vorhergehenden Ansprüche, **dadurch gekennzeichnet, dass** die Netzanschlusseinrichtung (1) ferner eine im Container (10) angeordnete Batterie (32) umfasst.

7. Mobile Netzanschlusseinrichtung (1) nach Anspruch 6, wenn dieser von Anspruch 4 oder 5 abhängig ist, **dadurch gekennzeichnet, dass** die Batterie (32) zumindest mittelbar mit dem zweiten Abgabefeld (21) elektrisch verbunden ist.

8. Mobile Netzanschlusseinrichtung (1) nach einem der vorhergehenden Ansprüche, **dadurch gekennzeichnet, dass** die Netzanschlusseinrichtung (1) ferner eine Zähleinrichtung (33) zum Ermitteln der von der Energieerzeugungsanlage erzeugten elektrischen Energie umfasst.

9. Mobile Netzanschlusseinrichtung (1) nach einem der vorhergehenden Ansprüche, **dadurch gekennzeichnet, dass** die Netzanschlusseinrichtung (1) ferner einen Gleichrichter (31) zum Umwandeln von Wechselstrom in Gleichstrom zur Energieversorgung der Netzanschlusseinrichtung (1) umfasst.

10. Mobile Netzanschlusseinrichtung (1) nach einem der vorhergehenden Ansprüche, **dadurch gekennzeichnet, dass** eine Seitenwand (13) oder ein Teil einer Seitenwand (13) des Containers (10) abnehmbar ist, so dass über eine Öffnung in der Seitenwand (13) Schaltanlagen in dem Container (10) einbringbar sind.

11. Mobile Netzanschlusseinrichtung (1) nach einem der vorhergehenden Ansprüche, **dadurch gekennzeichnet, dass** ein Boden des Containers (10) wenigstens eine Öffnung zum Durchführen eines oder mehrerer Kabel aufweist.

12. Mobiles Netzanschlusssystem zum Anschluss einer Energieerzeugungsanlage an einem Stromversorgungsnetz, umfassend eine mobile Netzanschlusseinrichtung (1) nach einem der vorhergehenden Ansprüche und einen Auflagecontainer, auf den der Container (10) aufsetzbar und mit dem dieser verbindbar ist.

13. Verfahren zum Anschließen einer Energieerzeugungsanlage an einem Stromversorgungsnetz, umfassend die folgenden Verfahrensschritte:
- Bereitstellen einer mobilen Netzanschlusseinrichtung (1) nach einem der Ansprüche 1 bis 11 oder eines mobilen Netzanschlusssystems nach Anspruch 14 im Bereich der Energieerzeugungsanlage;
- Anschließen der Energieerzeugungsanlage an das Abgabefeld (21) der Netzanschlusseinrichtung (1);
- Anschließen des Einspeisefeldes (22) an das Stromversorgungsnetz; und
- Inbetriebnehmen der Energieerzeugungsanlage.
